# DEMANDE DE BREVET EUROPEEN

(11) **EP 1 321 391 A1**
(43) Date de publication de la demande: **25.06.2003**
(21) Numéro de dépôt: 02358028.5
(22) Date de dépôt: 13.12.2002
(51) Int. Cl.: B65G 37/00, B07C 5/36

(54) **Installation de séparation et de dépose d'objets dans une direction longitudinale**

(30) Priorité: 21.12.2001 FR 0116774; 12.03.2002 FR 0203049
(71) Demandeur: Caustier France, 66000 Perpignan (FR)
(72) Inventeur: Caustier, Claude, 66000 Perpignan (FR)
(74) Mandataire: Domange, Maxime

(57) **Abrégé**

La présente invention concerne une Installation de séparation dans une direction longitudinale (XX') et de triage d'objets fragiles (1) de taille et poids pouvant être différents, comprenant :
- ledit dispositif de séparation et de dépose (2) comprenant deux premiers convoyeurs sans fin (2₁, 2₂), de préférence à chaîne, disposés côte à côte et parallèlement dans ladite direction longitudinale (XX'), la circulation de chaque dit premier convoyeur se faisant dans un plan horizontal autour de deux axes verticaux (D₁,-D'₁, D₂,-D'₂) espacés (L) dans ladite direction longitudinale (XX'),
- chaque dit premier convoyeur (2₁, 2₂) comprenant des demi-éléments de séparation (3₁, 3₂) qui coopèrent entre eux pour former lesdits compartiments (3), et déposer directement par gravité lesdits objets dans un réceptacle unitaire (5) d'un second convoyeur (4) disposé en contrebas dudit premier convoyeur, chaque dit réceptacle (5) coopérant de préférence avec un moyen de calibrage desdits objets par détermination de la valeur d'au moins une caractéristique de tri.

## Description

La présente invention concerne une installation de séparation dans une direction longitudinale et de triage d'objets fragiles de taille et poids pouvant être différents.

Plus particulièrement, la présente invention concerne une installation comprenant :
1) un dispositif de séparation et de dépose comprenant au moins un premier convoyeur sans fin constitué d'éléments de séparation régulièrement espacés dans ladite direction longitudinale du trajet de défilement dudit premier convoyeur, les espaces séparant lesdits éléments de séparation successifs formant des compartiments individuels dans lesquels lesdits objets sont logés et entraînés un à un, et
2) un second convoyeur sans fin de triage comprenant une suite de réceptacles unitaires, régulièrement espacés, aptes chacun à recevoir un dit objet, ledit second convoyeur de triage étant placé dans la continuité dudit dispositif de séparation et de dépose, en contrebas dudit premier convoyeur, chaque dit réceptacle unitaire coopérant de préférence avec un moyen de calibrage desdits objets par détermination de la valeur d'au moins une caractéristique de tri, de préférence la taille, le poids ou l'aspect.

Une des applications principales de l'invention est le calibrage de fruits et légumes de façon à les séparer en différentes catégories prédéterminées en fonction du ou des critères retenus, notamment de la valeur de la caractéristique de tri mesurée par ledit moyen de calibrage. Le moyen de calibrage peut être un moyen de pesage ou un moyen de visualisation ou encore de mesure de dimensions par un dispositif optique.

On connaît différents dispositifs de séparation par convoyage, adaptés à cette application, comprenant en général une chaîne sans fin supportant des éléments supports présentant des surfaces de révolution tels que des éléments du type "diabolo", dont les espaces qui les séparent constituent des alvéoles ou compartiments dans lesquels sont logés et entraînés les objets à trier. Ceux-ci sont en général alimentés en continu à partir d'un convoyeur en amont de type à bandes larges et horizontales sur lequel ils subissent un premier tri visuel et manuel. Les objets à trier tels que les fruits sont d'un même type mais présentent des caractéristiques différentes en fonction de leurs dimensions, de leur maturité, de leur poids, de leur aspect ou autres et arrivent donc mélangés.

L'objectif du dispositif de séparation est alors de les entraîner un à un pour les distribuer chacun dans un réceptacle unitaire constitué d'un plateau, d'un godet ou d'une coupelle, d'une chaîne multi-plateaux, multi-coupelles ou respectivement multi-godets, entraînée sur un convoyeur de triage et de calibrage. Ce dernier dépose ensuite à son tour les objets vers différentes sorties en fonction de leurs caractéristiques de tri mesuré en un endroit de l'installation entre le point où on est sûr qu'ils ont été séparés et donc individualisés les uns derrière les autres et la première sortie de triage possible.

Dans FR 2 682 941, il est connu d'utiliser des dispositifs de séparation comprenant des convoyeurs inclinés en pente montante pour que les effets combinés de cette pente et de la forme des diabolos favorisent l'ajustement et le positionnement desdits objets entre lesdits diabolos, notamment lorsque lesdits objets sont des fruits ou légumes de forme de quasi révolution.. Dans le cas où deux objets de petite taille se positionnent en se chevauchant dans l'espace central entre deux diabolos, de par l'inclinaison du premier convoyeur en pente montante, seul ledit objet en position inférieure reste dans le compartiment, car l'objet excédentaire retombe vers l'arrière jusqu'à trouver un espace disponible dans un compartiment suivant où il peut être logé en position centrale. C'est pourquoi pour une bonne efficacité, une longueur suffisante de premier convoyeur est de l'ordre en général de 1,5 m à 2 m environ pour la plupart des systèmes connus.

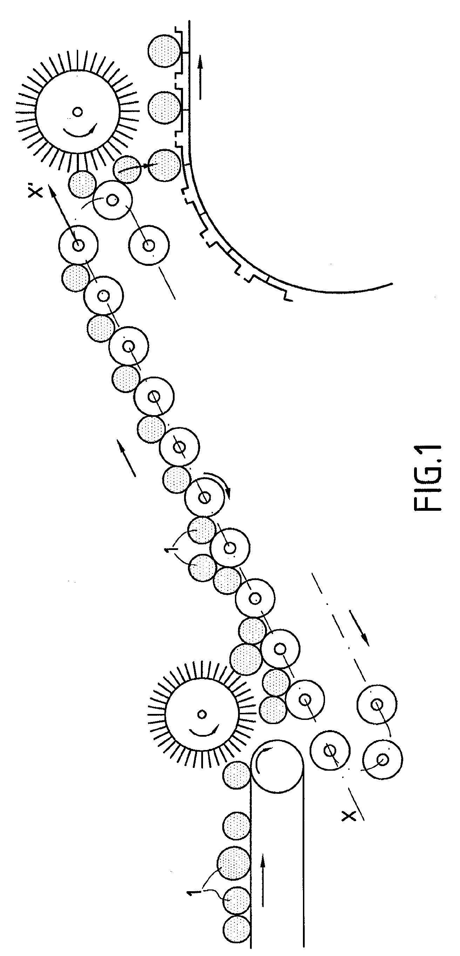

Dans les systèmes connus représentés figure 1, ledit dispositif de séparation comprend un seul convoyeur sans fin dont la circulation de fait dans un plan vertical autour de deux pignons à axes horizontaux, espacés dans ladite direction longitudinale.

Il en résulte que lorsque les éléments de séparation tels que diabolos dudit premier convoyeur amorcent une rotation autour de l'axe longitudinal du pignon à une extrémité dudit premier convoyeur, ledit objet se trouve libéré de son compartiment ou alvéole et il subit alors une chute jusqu'à atteindre le réceptacle dudit second convoyeur disposé en contrebas dudit premier convoyeur.

Compte tenu d'une part, de l'inclinaison en pente montante dudit premier convoyeur et d'autre part, de la présence des pignons de circulation permettant la circulation de haut en bas des diabolos autour des pignons à axes horizontaux dudit premier convoyeur la hauteur de chute des objets lors de la dépose dans les réceptacles dudit second convoyeur est relativement importante, en général supérieure à 25 cm. Dans la mesure où les différents objets ont un poids différent et sont propulsés dudit premier convoyeur vers les réceptacles dudit second convoyeur avec une certaine vitesse linéaire, la précision de la dépose dans les réceptacles dudit second convoyeur n'est pas satisfaisante.

On comprend en effet que les objets, du fait de leur différence de poids, étant animés d'une vitesse linéaire non nulle lors de la désolidarisation dudit premier convoyeur ne suivent pas la même trajectoire de chute.

Un réglage de la synchronisation ou du déphasage entre lesdits premiers et second convoyeurs est nécessaire, c'est-à-dire un réglage de la distance à parcourir par un réceptacle unitaire du second convoyeur pour arriver au point de chute d'un dit objet par décalage en rotation dudit pignon d'engrenage dudit premier convoyeur, et nécessaire pour vitesse linéaire de défilement des réceptacles dudit second convoyeur pour compenser les variations de poids ou de taille moyennes desdits objets entre les différents lots desdits objets à trier.

En outre, cette hauteur de chute subie par lesdits objets fragiles que sont les fruits ou légumes, peut causer leur dégradation car ceux-ci ne supportent pas en général, les chocs trop forts..

C'est pourquoi dans FR 2 682 941 le transfert des fruits entre l'extrémité haute du premier convoyeur de séparation et le second convoyeur de calibrage des réceptacles unitaires en contrebas, est assisté par une brosse cylindrique entraînée en rotation. Mais, la brosse cylindrique accompagne les objets au cours d'une partie seulement de leur chute. D'autre part, de par leur différence de taille les objets s'enfoncent plus ou moins profondément dans les poils de la brosse et connaissent donc une vitesse linéaire de chute en direction des réceptacles dudit second convoyeur, différente selon leur taille. La synchronisation du premier convoyeur et du second convoyeur de calibrage reste donc encore un problème.

On connaît dans FR 2 332 818 et FR 2 748 220 des dispositifs de séparation et de dépose d'objets fragiles faits d'un premier convoyeur permettant la dépose desdits objets dans les réceptacles d'un second convoyeur de calibrage, la dépose se faisant sans chute des objets fragiles.

Toutefois, dans le système proposé dans FR 2 332 818, le dispositif de séparation et de dépose comprend un convoyeur constitué de deux courroies circulant parallèlement qui viennent coincer lesdits objets entre les deux courroies dans des empreintes prévues à cet effet, en vis à vis sur chaque courroie. Ce dispositif n'est pas satisfaisant car les objets fragiles sont soumis à un coincement entre les courroies et peuvent être, de ce fait, endommagés. D'autre part, lorsque ce dispositif est alimenté à partir d'un dispositif d'alignement, il ne fonctionne correctement qu'avec des objets ayant tous sensiblement la même taille. En effet, à l'extrémité du dispositif d'alignement, les fruits arrivent au touche à touche et l'espacement entre les fruits et donc la taille des fruits doit correspondre à l'espacement entre les empreintes formées par les courroies. A défaut, les fruits pourraient se loger entre les empreintes, ce qui d'une part, peut les endommager et d'autre part, perturber la synchronisation de leur dépose dans un réceptacle d'un dit second convoyeur de calibrage.

De plus, les objets peuvent se coincer entre les deux courroies à des endroits intermédiaires ne correspondant pas aux logements en creux constitués par les empreintes prévues pour recevoir lesdits objets; entraînant ainsi un dépôt ultérieur en dehors des réceptacles unitaires prévus dans le second convoyeur dont le défilement est synchronisé par rapport aux dites empreintes.

Un autre inconvénient du dispositif décrit dans FR 2 332 818 est que l'espacement entre les logements en creux ménagés dans les courroies constitutives dudit premier convoyeur est identique à l'espacement entre les réceptacles constitutifs dudit second convoyeur, lequel doit être au moins le double de la dimension moyenne des objets à trier pour éviter une interférence dans les analyses lors du calibrage de deux objets disposés sur des réceptacles successifs.

Dans FR 2 748 220, l'installation comprend deux vis sans fin horizontales qui tournent en sens inverse, avec un organe de guidage et de support tel qu'un barreau situé entre les vis et s'étendant parallèlement à celles-ci et dessous celles-ci. Les fruits sont amenés un à un pour être déposés par gravité dans des réceptacles à l'extrémité des deux vis. Dans cette installation les deux vis sans fin permettent de faire tourner le fruit sur lui-même dans certaines conditions, ce qui permet de trier les fruits en fonction de leurs caractéristiques d'aspect, en combinaison avec des moyens permettant de vérifier l'aspect de l'ensemble du fruit tel qu'un caméscope visionnant l'ensemble de la surface du fruit, et des moyens pour envoyer ces images à un ordinateur pour les comparer à des images de référence mises en mémoire. La rotation du fruit sur lui-même implique que celui-ci repose sur l'organe support fixe, et, donc implique un positionnement dudit organe support par rapport aux vis en fonction de la taille du fruit. Dès lors, pour un positionnement donnée, si la différence de diamètre entre un grand fruit et un petit fruit est trop importante, tous les fruits ne tournent plus.

En outre, dans FR 2 748 220, la rotation du fruit ne peut se faire qu'en générant des frottements entre le fruit, lesdites vis et le support fixe ce qui cause un risque d'endommagement des fruits.

Enfin, dans FR 2 748 220, si les fruits ne sont pas sensiblement ronds, notamment ovales et/ou avec un seul axe de quasi révolution, et sont positionnés avec ledit axe de révolution disposé transversalement par rapport à la direction de translation des fruits, les fruits sont poussés sans tourner engendrant ainsi des frottements supplémentaires considérables entre le fruit, les vis et le support fixe inférieur.

Le but de la présente invention est de fournir une installation de triage du type comportant un dispositif de séparation d'objets fragiles tels que des fruits, un à un en vue de leur dépose dans les réceptacles unitaires d'un second convoyeur de calibrage placé en continuité à l'extrémité et en contrebas dudit premier convoyeur, qui permette d'effectuer ladite dépose dans lesdits réceptacles dudit second convoyeur, ne nécessitant pas de réglage du déphasage ou de la synchronisation mécanique dudit second convoyeur par rapport audit premier convoyeur selon lots, en cas de variation de la taille et/ou du poids desdits objets à trier.

Un autre but à la base de l'invention est donc de fournir un dispositif de séparation et de dépose d'objets fragiles de tailles variables ne causant pas ou le moins possible d'endommagement de leur surface lors de leur entraînement sur ledit premier convoyeur et lors de leur dépose dans les réceptacles dudit second convoyeur.

Un autre but est de fournir un dit dispositif de séparation et de dépose qui assure avec une grande fiabilité et précision, d'une part la séparation des objets un par un, et cela quelle que soit la taille de ces objets, et d'autre part la dépose des objets dans les réceptacles dudit second convoyeur, tout en conservant un débit rapide de triage par l'installation.

Un autre but de la présente invention est de fournir un dispositif de séparation et de dépose qui permettent de faire tourner les objets sur eux-même, une fois séparés et avant leur dépose pour en analyser l'ensemble de la surface extérieure à l'aide de moyens d'analyse de l'aspect du fruit, telle que une caméra reliée à un ordinateur et les trier ultérieurement en fonction de leur aspect, notamment pour le triage colorimétrique ou qualitatif ou encore selon la taille.

Pour ce faire, a présente invention fournit une installation de séparation dans une direction longitudinale et de triage d'objets fragiles de taille et poids pouvant être différents, comprenant :
- un dispositif de séparation et de dépose comprenant au moins un premier convoyeur sans fin constitué d'éléments de séparation comprenant des surfaces de support et d'entraînement, régulièrement espacés, dont les espaces qui les séparent dans ladite direction longitudinale du trajet de défilement dudit premier convoyeur constituent des compartiments individuels dans lesquels lesdits objets peuvent être logés et entraînés un à un, avant d'être déposés par gravité en fin de course dudit premier convoyeur, respectivement dans :
- une suite de réceptacles unitaires, régulièrement espacés, aptes à recevoir chacun un dit objet, constituant un second convoyeur sans fin de triage, ledit second convoyeur étant disposé en contrebas dudit premier convoyeur, chaque dit réceptacle coopérant, de préférence avec un moyen de calibrage desdits objets par détermination de la valeur d'au moins une caractéristique de tri.

Selon la présente invention, l'installation est caractérisée en ce que :
- ledit dispositif de séparation et de guidage comprend deux dits premiers convoyeurs sans fin, de préférence à chaîne, disposés côte à côte et parallèlement dans ladite direction longitudinale, la circulation de chaque dit premier convoyeur se faisant dans un plan horizontal autour de deux axes verticaux espacés dans ladite direction longitudinale,
- chaque dit premier convoyeur comprenant des demi-éléments de séparation comprenant chacun une surface de support et d'entraînement dont les formes respectives sur chaque dit premier convoyeur sont, de préférence, symétriques par rapport à un plan axial vertical dudit dispositif de séparation et complémentaires, qui coopèrent entre eux pour :
   ■ former lesdits éléments de séparation et lesdits compartiments dans la portion du trajet de défilement correspondant à ladite direction longitudinale, et
   ■ déposer directement par gravité lesdits objets dans un dit réceptacle unitaire dudit second convoyeur lorsque deux demi éléments formant un dit élément de séparation s'écartent l'un de l'autre par rotation autour de leurs dits axes de rotation verticaux à l'extrémité dudit dispositif de séparation et de guidage.

On comprend que chaque dit premier convoyeur comprend des demi-éléments de séparation comprenant eux-mêmes chacun une surface de support et d'entraînement dont les formes respectives sur chaque dit premier convoyeur sont symétriques par rapport à un plan axial vertical médian dans ladite direction longitudinale, c'est-à-dire dans l'espace entre les deux dits premiers convoyeurs dudit dispositif de séparation et de dépose, et lesdits demi-éléments de séparation coopèrent dans leur déplacement entre eux, pour former lesdits compartiments et pour déposer lesdits objets dans lesdits réceptacles dudit second convoyeur en fin de course desdits premiers convoyeurs.

La présente invention permet d'obtenir une séparation d'objets tels que fruits et légumes de taille et de forme hétérogènes mais dont la surface externe est de préférence quasiment de révolution par rapport à au moins un axe pour pouvoir être entraînés en rotation sur eux-mêmes par rapport audit axe de préférence quasiment révolution desdits objets.

Le dispositif de séparation de guidage selon l'invention présente plusieurs avantages. Tout d'abord, son encombrement en hauteur est beaucoup moins important que dans les dispositifs à premier convoyeur incliné en pente montante avec des diabolos circulant en rotation de bas en haut selon la technique antérieure.

Il en résulte qu'il n'est plus nécessaire d'adapter la synchronisation mécanique, c'est-à-dire le déphasage entre les premiers et second convoyeurs lorsque l'on a à trier des lots d'objets dont la taille moyenne desdits objets les constituant est différente.

Avantageusement, la motorisation desdits premiers convoyeurs est placée sous les pignons d'axes de rotation à l'extrémité dudit dispositif de séparation et de dépose du côté de son alimentation, et la circulation dudit deuxième convoyeur se fait autour d'un pignon d'axe horizontal qui s'étend en partie en dessous l'autre extrémité dudit dispositif de séparation et de dépose

Plus particulièrement, la hauteur de chute desdits objets fragiles lors de ladite dépose desdits objets dans lesdits réceptacles unitaires est inférieure à 100 mm, de préférence à 50 mm, soit en général environ inférieure à deux fois , de préférence inférieure à une fois, la hauteur moyenne desdits objets du lot à trier.

Afin de réduire la hauteur de chute desdits objets fragiles entre lesdits premiers convoyeurs et ledit second convoyeur, le bord supérieur desdits réceptacles unitaires dudit second convoyeur de triage arrive juste au-dessous de la face inférieure desdits premiers convoyeurs à leurs extrémités, c'est-à-dire le plus près possible. De préférence, lesdits demi éléments de séparation comprennent au moins une partie fixe qui occupe essentiellement la face supérieure desdits premiers convoyeurs et, notamment, recouvre les chaînes desdits premiers convoyeurs lorsqu'il s'agit d'un convoyeur à chaîne sans fin.

Dans un mode de réalisation, lesdits demi-éléments de séparation occupent essentiellement uniquement la face supérieure desdits premiers convoyeurs. Dans ce cas, ledit second convoyeur peut être placé juste dessous les chaînes desdits premiers convoyeurs lorsqu'il s'agit de convoyeurs à chaînes sans fin.

On entend ici par "face supérieure desdits premiers convoyeurs" la face dudit premier convoyeur située au-dessus du plan axial horizontal de circulation desdits premiers convoyeurs.

La dépose des objets dans lesdits réceptacles unitaires n'apparaît qu'à partir du moment où les demi-éléments de séparation en vis à vis constituant un élément de séparation, commencent à s'écarter l'un de l'autre, étant entraînés en rotation autour des axes verticaux respectifs de chacun desdits premiers convoyeurs. Au moment de la dépose dans les réceptacles dudit second convoyeur, les objets sont animés d'une vitesse linéaire supérieure à la vitesse linéaire des éléments de séparation dans la partie de leur trajet correspondant à ladite direction longitudinale. En effet, cette vitesse linéaire de dépose d'un objet dépend de la distance entre d'une part, le point de contact de l'objet et du demi-élément de séparation qui le supporte, et d'autre part, l'axe de rotation concerné. Il en résulte qu'il est possible de prévoir un écartement important des réceptacles dudit second convoyeur, tout en conservant un espacement réduit entre lesdits éléments de séparation desdits premiers convoyeurs, ce qui constitue un autre avantage de l'installation selon la présente invention.

Pour faciliter l'alimentation dudit dispositif de séparation et de dépose en dits objets fragiles, cette alimentation est réalisée à partir d'un dispositif d'alignement à courroies, placés en continuité l'un de l'autre dans ladite direction longitudinale, notamment un dispositif d'alignement de type connu comportant deux courroies placées côte à côte dans une même direction longitudinale horizontale et disposées de façon inclinée en vis à vis, d'inclinaisons inverses, de façon à former sensiblement un V. Dans ce cas, il est avantageux de pouvoir espacer lesdits éléments de séparation dudit premier convoyeur d'une distance correspondant à la dimension moyenne dans la direction longitudinale desdits objets fragiles à trier, lorsqu'ils sont en place dans lesdits compartiments dudit premier convoyeur. Il suffit alors de fixer la vitesse de défilement linéaire desdits premiers convoyeurs dans ladite direction longitudinale, de manière à ce que les fruits de diamètre inférieur au diamètre moyen arrivant au touche à touche depuis ledit dispositif d'alignement se logent respectivement dans deux compartiments successifs dudit dispositif de séparation et de guidage.

Ainsi, si deux objets de tailles supérieures à la taille moyenne arrivent au touche à touche depuis le dispositif d'alignement, ils se logeront dans des dits compartiments dudit premier convoyeur espacés d'un compartiment vide. et deux objets de tailles inférieures au diamètre moyen des objets ne risqueront pas de se loger dans un même compartiment .

Dans un mode de réalisation particulier, deux dits réceptacles unitaires (5) successifs dudit deuxième convoyeur sans fin sont espacés d'un pas (ou distance régulière) supérieur au pas d'espacement de dits éléments de séparation successifs dans ladite direction longitudinale du trajet desdits premiers convoyeurs, de préférence le pas d'espacement desdits réceptacles unitaires est sensiblement le double du pas d'espacement desdits éléments de séparation.

Plus particulièrement, le pas d'espacement desdits éléments de séparation successifs est sensiblement identique à la dimension moyenne desdits objets dans ladite direction longitudinale XX', de préférence à 60 à 120 mm, de préférence encore, environ 75 mm.

Dans un mode de réalisation particulier, ledit dispositif de séparation et de dépose s'étend dans ladite direction longitudinale sur une longueur inférieure à 1,5 m, de préférence inférieure à 1 m, de préférence encore inférieure à 0,5 m, ce qui correspond en général à une capacité de 5 à 10 dits compartiments dans ladite direction longitudinale.

On comprend que la distance ou «pas d'espacement» entre lesdits éléments de séparation s'entend alors de la distance entre leurs dits axes de révolution.

Dans un mode préféré de réalisation, lesdits demi-éléments de séparation comprennent desdites surfaces de support et d'entraînement desdits objets qui définissent des surfaces de révolution d'axe, de préférence, horizontal ou vertical.

Dans un mode de réalisation, lesdits demi-éléments de séparation comprennent desdites surfaces de support et d'entraînement desdits objets qui définissent des surfaces d'axe de révolution, de préférence, horizontal ou vertical, surface de révolution dont au moins une partie est apte à être entraînée en rotation sur elle-même autour dudit axe de révolution de manière à faire tourner lesdits objets sur eux-mêmes. Lesdits demi-éléments de séparation peuvent ainsi être, au moins en partie, mobiles en rotation autour de leurs dits axes, et permettre la rotation sur eux-mêmes desdits objets, de manière à pouvoir présenter le fruit sous toutes ses faces à un dispositif qui analyse le fruit en fonction de différents paramètres nécessitant une inspection sous toutes ses faces, tel que son aspect, sa maturité ou sa qualité, etc.

Plus particulièrement, ladite surface de révolution d'axe de révolution horizontal ou vertical est apte à être entraînée en rotation, au moins en partie, par une bande défilante dans ladite direction longitudinale venant en friction contre ladite surface de révolution ou partie de surface de révolution apte à être entraînée en rotation. Ladite bande transmet un mouvement de rotation à ladite surface par friction lorsqu'elle défile.

De préférence, lesdits demi-éléments de séparation définissent des surfaces tronconiques, de préférence, symétriques par rapport à un plan axial vertical de symétrie desdits compartiments de séparation, dans ladite direction longitudinale.

Plus particulièrement encore, lesdits demi-éléments de séparation définissent, au moins en partie, des demi troncs de cônes fixes d'axes horizontaux symétriques par rapport à un plan axial vertical de symétrie desdits compartiments de séparation, dans ladite direction longitudinale.

Dans un mode de réalisation, lesdits demi-éléments de séparation peuvent comprendre une partie fixe et une partie mobile solidaire de ladite partie fixe, ladite partie mobile définissant une dite surface de révolution apte à être entraînée en rotation sur elle-même autour de son axe de révolution, ladite partie mobile étant, de préférence, constituée par une roulette.

Plus particulièrement, ladite roulette est placée à l'extrémité d'une dite partie fixe, cette dernière constituant une surface demi tronconique dont la génératrice est en pente descendante vers ledit plan axial (P) verticale de symétrie desdits compartiments de même axe de révolution horizontal que ladite roulette, de préférence placée à son extrémité de plus petit diamètre la plus proche dudit plan axial de symétrie des dits compartiments de séparation, et ladite bande défilante est placée horizontalement dans ladite direction longitudinale dessous ladite roulette.

Avantageusement, une même bande défilante disposée axialement dans ladite direction longitudinale sur une partie seulement de la longueur dudit dispositif de séparation et de dépose entraîne en rotation lesdites roulettes de chacun desdits premiers convoyeurs.

Dans une variante de réalisation, lesdits demi-éléments de séparation comprennent desdites surfaces de support et d'entraînement desdits objets qui définissent des surfaces d'axe de révolution vertical, dont une partie au moins de ladite surface de révolution, constituée de préférence d'une roulette, est apte à être entraînée en rotation horizontale autour de son dit axe vertical par deux dites bandes défilantes placées latéralement par rapport aux dits demi-éléments de séparation dans ladite direction longitudinale XX', venant en friction contre lesdites surfaces de révolution aptes à être entraînées en rotation. On comprend que dans cette variante de réalisation, lesdits demi-éléments de séparation occupent essentiellement uniquement la face supérieure desdits premiers convoyeurs et lesdites bandes défilantes sont en position inclinée par rapport à la verticale pour venir en contact avec lesdites surfaces de révolution mobiles lorsque celles-ci sont de forme tronconique.

Lesdits demi-éléments de séparation peuvent être constitués par des éléments rigides et former ainsi desdites surfaces support dures non déformables par ledit objet. Lesdits demi-éléments de séparation peuvent également être constitués par des éléments souples ou semi-rigides tels que des éléments réalisés en caoutchouc ou en mousse, au moins en partie.

Avantageusement, lesdits demi-éléments de séparation comprennent desdites surfaces de support et d'entraînement desdits objets qui sont, au moins en partie, revêtues de poils souples ou semi-rigides. Lesdites surfaces de support formant ainsi une brosse qui constitue un tapis amortisseur, lesdits poils peuvent se déformer sous le poids desdits objets.

Plus particulièrement encore, lorsque lesdits demi-éléments de séparation comprennent une dite partie mobile, notamment une dite roulette, sa surface peut être revêtue, sur une partie au moins, de poils pour constituer une brosse rotative.

La présente invention fournit également un procédé de triage d'objets fragiles à l'aide d'une installation selon l'invention. On réalise les étapes dans lesquelles :
a) on alimente ledit dispositif de séparation avec desdits objets fragiles, de préférence à partir d'un dit dispositif aligneur, et
b) les vitesses linéaires respectives de défilement desdits premiers et second convoyeurs sont réglées de manière à ce que lesdits objets fragiles soient déposés dans lesdits réceptacles unitaires, c'est-à-dire que ledit second convoyeur présente un dit réceptacle unitaire lorsque lesdits demi-éléments de séparation à l'extrémité dudit premier convoyeur s'écartent et déposent un dit objet.

Dans l'étape b) on règle la vitesse linéaire dudit deuxième convoyeur de manière à ce que celle-ci soit supérieure, de préférence le double de la vitesse linéaire desdits objets en translation dans lesdits compartiments desdits premiers convoyeurs dans ladite direction longitudinale.

Selon une autre caractéristique avantageuse, la cadence de dépose et de réception desdits objets par respectivement lesdits premiers et second convoyeurs correspond à une cadence d'au moins 5 objets par seconde, de préférence au moins 10 objets par seconde.

Selon une autre caractéristique avantageuse du procédé selon l'invention, la vitesse linéaire (m/sec) relative desdits objets dans ladite direction longitudinale XX' par rapport auxdits réceptacles lors de ladite dépose est sensiblement nulle.

Ceci signifie que la vitesse linéaire dudit deuxième convoyeur est sensiblement identique à la vitesse linéaire desdits objets fragiles lors de leur dite dépose par lesdits premiers convoyeurs.

On comprend que le rapport entre la vitesse linéaire de dépose desdits objets et la vitesse linéaire desdits objets en translation dans ladite direction longitudinale dépend de la géométrie desdits éléments de séparation desdits premiers convoyeurs, et notamment de la distance séparant d'une part, le point de contact entre objets et demi-éléments de séparation et d'autre part, les axes de rotation concernés dudit premier convoyeur.

Plus précisément, pour obtenir une vitesse linéaire relative nulle dudit objet lors de sa dépose dans ledit réceptacle, il y a lieu d'adapter les deux paramètres suivants :
- d'une part, la valeur du rapport entre le pas d'espacement desdits réceptacles unitaires dudit deuxième convoyeur, le pas d'espacement desdits éléments de séparation desdits premiers convoyeurs, et
- d'autre part, la géométrie desdits éléments de séparation, à savoir plus particulièrement, la distance entre d'une part les points de contact desdits objets avec lesdits demi-éléments de séparation, et d'autre part, lesdits axes de rotation.

On comprend également que le rapport entre la vitesse linéaire des réceptacles dudit deuxième convoyeur et la vitesse linéaire desdits objets en translation dans lesdits compartiments desdits premiers convoyeurs dans ladite direction longitudinale est égale au rapport entre le pas d'espacement desdits réceptacles unitaires dudit deuxième convoyeur et le pas d'espacement desdits éléments de séparation desdits premiers convoyeurs.

Plus particulièrement, la vitesse linéaire dudit deuxième convoyeur est supérieure, de préférence sensiblement le double, de la vitesse linéaire desdits objets en translation dans lesdits compartiments desdits premiers convoyeurs dans ladite direction longitudinale XX'.

Ainsi, si en fonction de la distance entre lesdits éléments de séparation et lesdits axes de rotation de ces éléments de séparation, la vitesse linéaire de dépose des fruits est le double de la vitesse linéaire des objets en translation dans lesdits compartiments desdits premiers convoyeurs dans ladite direction longitudinale, alors la vitesse linéaire et le pas d'espacement desdits réceptacles unitaires dudit second convoyeur devront être également le double de la vitesse linéaire et du pas d'espacement desdits éléments de séparation desdits premiers convoyeurs pour obtenir une vitesse linéaire relative nulle dudit objet lors de sa dépose dans un dit réceptacle.

Selon une autre caractéristique avantageuse du procédé selon l'invention, la vitesse linéaire de défilement dudit dispositif d'alignement est réglé pour obtenir une cadence d'alimentation du dispositif de séparation et de dépose identique à ladite cadence de dépose desdits objets, lorsque ledit dispositif d'alignement alimente ledit dispositif de séparation et de dépose avec des objets au touche à touche, dont la taille correspond à la plus petite taille desdits objets dans un lot d'objets à trier.

Lorsque l'installation selon l'invention comporte une dite bande défilante pour faire tourner les fruits sur eux-mêmes, la vitesse linéaire de défilement de ladite bande défilante permettant la rotation desdits objets sur eux-mêmes, est sensiblement supérieure ou inférieure (mais non identique) à la vitesse linéaire du dit premier convoyeur de manière à permettre la rotation desdits objets sur eux-mêmes.

D'autres avantages et caractéristiques de la présente invention apparaîtront à la lumière détaillée de plusieurs modes de réalisation qui vont suivre, faits en référence aux figures 1 à 5 dans lesquelles :
La figure 1 représente une installation de triage avec dispositif de séparation et guidage à pente inclinée montante selon la technique antérieure.
La figure 2 représente une vue de dessus d'une installation selon l'invention.
La figure 3 représente une vue de côté d'une installation selon l'invention.
La figure 4 représente une coupe selon AA de l'installation de l'invention sur la figure 3.
La figure 5 représente une coupe BB de l'installation de la figure 3.
La figure 6 représente une vue de côté d'une installation selon la présente invention équipée de moyens permettant de faire tourner lesdits objets 1 sur eux-mêmes.
La figure 7 représente une installation selon la figure 6 en vue de dessus.
La figure 8 représente une installation selon la figure 6 et 7 en coupe transversale.
Les figures 9A et 9B représentent une vue en coupe de demi-éléments de séparation avec (figure 9A) et sans (9B) partie fixe 3₄.

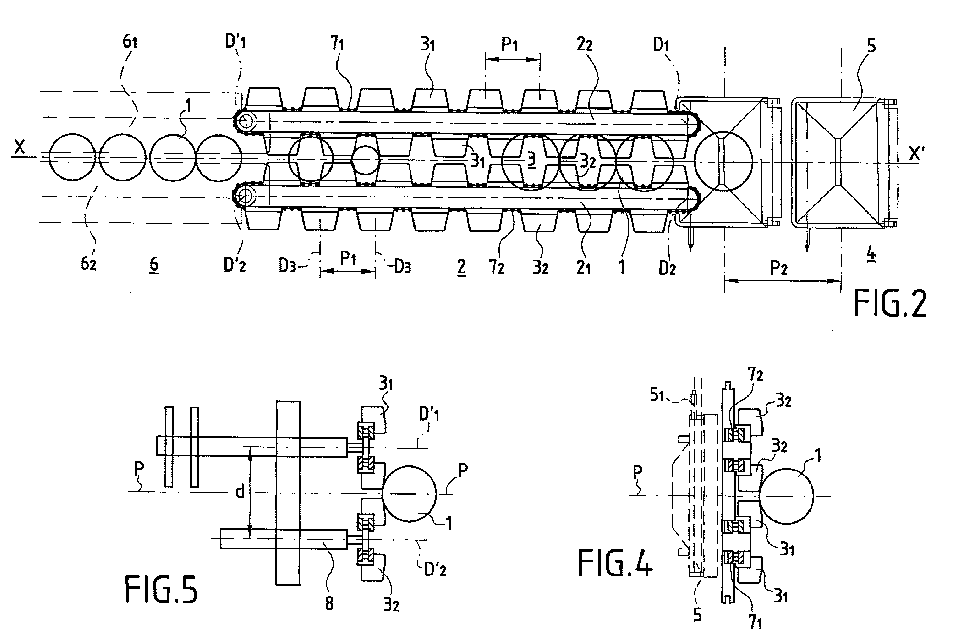

Sur les figures 2 à 4, on a représenté une installation selon la présente invention, comprenant :
1) un dispositif d'alignement 6, et
2) un dispositif de séparation et de dépose 2, et
3) un dit second convoyeur de calibrage 4.

Ces 3 éléments s'étendent dans la direction longitudinale XX'.

Le dispositif d'alignement 6 est composé de deux courroies 6₁, 6₂ disposées en vis à vis selon une pente inclinée inverse de façon à former un V, dans lesquelles viennent se loger lesdits objets fragiles 1 alignés l'un derrière l'autre. Compte tenu du défilement desdites courroies 6₁, 6₂ les objets 1 arrivent à l'extrémité dudit dispositif d'alignement du côté dudit dispositif de séparation et de dépose 2 en touche à touche.

Le dispositif de séparation et de guidage 2 comprend deux dits premiers convoyeurs sans fin 2₁, 2₂ à chaîne, disposés côte à côte et parallèlement dans ladite direction longitudinale XX', la circulation de chaque dit premier convoyeur se fait dans un plan horizontal autour de deux axes verticaux respectivement D₁-D'₁ et D₂-D'₂.

Chacun desdits premiers convoyeurs 2₁, 2₂ assure le défilement de demi-éléments de séparation 3₁, 3₂. Ces demi-éléments de séparation 3₁, 3₂ définissent des demi-troncs de cônes fixes d'axes horizontaux D₃. Ces demi-troncs de cônes occupent uniquement la face supérieure desdits premiers convoyeurs, c'est-à-dire plus précisément, essentiellement au dessus des faces inférieures des chaînes 7₁, 7₂ assurant la circulation des deux dits premiers convoyeurs 2₁, 2₂, de sorte que ledit second convoyeur 4 peut être placé juste dessous lesdites chaînes 7₁, 7₂.

Chaque dit premier convoyeur 2₁, 2₂ comprend ainsi des demi-éléments de séparation comprenant chacun une surface de support et d'entraînement dont les formes respectives sur chaque demi convoyeur sont symétriques par rapport à un plan axial vertical médian dudit dispositif de séparation et de dépose 2. Plus précisément, les deux demi-troncs de cônes constituant deux demi-éléments de séparation en vis à vis 3₁, 3₂ sont disposés de sorte que leur génératrice est en pente descendante vers ledit plan axial vertical médian, de manière à ce qu'ils définissent des formes complémentaires qui coopèrent entre elles pour former des compartiments individuels 3 dans lesquels lesdits objets 1 peuvent être logés et entraînés un à un dans la portion du trajet de défilement desdits premiers convoyeurs 2₁, 2₂ correspondant à ladite direction longitudinale XX'.

En d'autres termes, deux demi-éléments de séparation 3₁, 3₂ disposés en vis à vis forment un élément de séparation ; et deux éléments de séparation adjacents dans ladite direction longitudinale XX' forment dans leur espace central intermédiaire un dit compartiment individuel 3 dans lequel peuvent se loger lesdits objets.

Une partie des demi-troncs de cônes 3₄, du côté de leur plus grand diamètre, chevauche les chaînes sans fin 7₁, 7₂ desdits premiers convoyeurs 2₁, 2₂ de manière à les recouvrir, à assurer une fonction de guidage de chaînes empêchant leur déraillement.

Les demi-éléments de séparation 3₁, 3₂ de chacun desdits premiers convoyeurs 2₁, 2₂ sont régulièrement espacés dans ladite direction longitudinale XX' d'un pas d'espacement p₁ d'une valeur correspondant à un diamètre moyen de fruit approprié pour trier des pêches, kiwis, tomates, poivrons, artichauts, oranges ou pommes.

La distance (d) entre deux axes verticaux en vis à vis de chacun desdits premiers convoyeurs 2₁, 2₂ à savoir la distance entre D₁ et D₂ ou D'₁ et D'₂ est environ de 97,5 mm. Cet écart entre D₁ et D₂ est essentiellement occupé par deux demi-éléments de séparation 3₁ , 3₂. Le diamètre des pignons de rotation des deux chaînes 7₁, 7₂ est de 33 mm.

Il résulte de cette géométrie du dispositif de séparation et de dépose 2 que la vitesse linéaire des demi-éléments de séparation 3₁, 3₂ lorsqu'ils sont en rotation autour des axes D₁ et D₂ respectivement est le double de leur vitesse linéaire de défilement dans la portion de leur trajet en translation dans ladite direction longitudinale XX'.

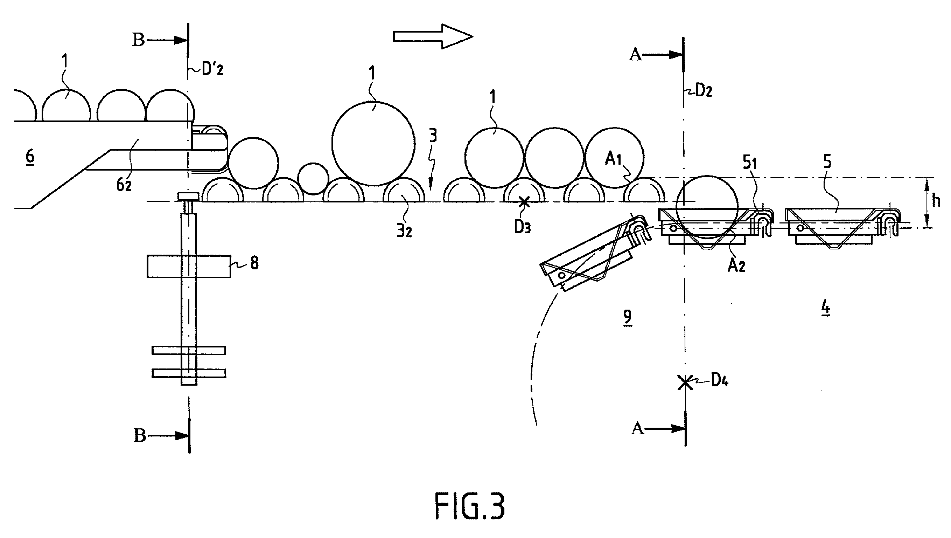

Sur les figures 2 et 3, on a représenté un dispositif de séparation et de dépose 2 comprenant 7 compartiments individuels 3 dans lesquels des objets fragiles de taille moyenne sont au touche à touche. La distance L entre les axes D₁ et D'₁ et D₂ et D'₂ est de 650 mm:

Lorsque les demi-éléments de séparation 3₁, 3₂ arrivent à l'extrémité de leur trajet dans la direction longitudinale XX', ils commencent une rotation autour respectivement des axes D₁ et D₂, ils s'écartent par rotation latérale dans le plan horizontal, ce qui provoque la dépose par gravité d'un dit objet supporté par lesdits demi-éléments de séparation 3₁, 3₂ dans un réceptacle unitaire 5 dudit second convoyeur de calibrage 4.

Ledit second convoyeur de calibrage 4 est constitué par une succession de réceptacles unitaires 5 espacés d'un pas régulier p2 correspondant donc au double du pas d'espacement des compartiments individuels 3 desdits premiers convoyeurs 2₁, 2₂. Les réceptacles unitaires 5 coopèrent souvent avec un moyen de pesage tel qu'une balance électronique qui permet la détermination du poids et l'éjection dudit objet fragile par un moyen de déversement 5₁ sur une table ou un convoyeur de tri ou de conditionnement non représenté disposé perpendiculairement audit convoyeur de calibrage 4, en fonction de la valeur de leur caractéristique de tri, à savoir ici de leur poids.

Le convoyeur de calibrage 4 est placé en contrebas du dispositif de séparation et de dépose 2 et s'étend sur au moins 10 mètres en général. Ce convoyeur est un convoyeur à chaîne sans fin à circulation dans un plan vertical, c'est-à-dire autour de pignons 9 d'axes horizontaux D₄ et de diamètres d'au moins 400 mm.

Tous les dispositifs de motorisation 8 pour l'entraînement en rotation des deux chaînes de convoyage 7₁, 7₂ sont disposés dessous les deux pignons d'axes D'₁-D'₂ situés à l'extrémité du côté du dispositif d'alignement, de façon à réduire l'encombrement sur les pignons d'axes D₁, D₂ du côté du deuxième convoyeur de calibrage 4 et permettre ainsi le rapprochement en hauteur de celui-ci dessous le dispositif de séparation et de guidage 2, une partie du pignon 9 permettant la circulation de bas en haut des réceptacles du convoyeur de calibrage 4 pouvant se loger sous l'extrémité du dispositif de séparation et de dépose 2..

De par le fait que les deux dits premiers convoyeurs 2₁, 2₂ circulent dans un plan horizontal d'une part, que d'autre part, les axes de rotation D₁, D₂ à l'extrémité du convoyeur de calibrage sont supportés par des guides semi-circulaires à gorge, non entraînés par une motorisation et qu'enfin lesdits demi-éléments de séparation 3₁, 3₂ occupent uniquement la face supérieure au-dessus des chaînes de convoyage 7₁, 7₂, il est possible de rapprocher au plus près le convoyeur de calibrage 4 dessous lesdits premiers convoyeurs 2₁, 2₂. La hauteur de chute h, à savoir la hauteur entre le niveau des points de contact desdits objets fragiles sur lesdits éléments de séparation (A₁) et les points de contact entre desdits objets fragiles dans lesdits réceptacles unitaires 5 (A₂) est de l'ordre de 50 mm.

Ainsi, à titre illustratif pour des objets à trier, tels que des fruits ou légumes de diamètre de 40 à 100 mm, notamment des pêches, tomates, poivrons, artichauts, oranges ou pommes avec un diamètre moyen de 76 mm. On choisit avantageusement un pas d'espacement desdits éléments de séparation p₁ de 76 mm, lesdits objets de taille moyenne étant alors au touche à touche dans deux compartiments 3 adjacents, et un pas d'espacement desdits réceptacles unitaires p₂ de 158 mm. Dans ces conditions, si la cadence de dépose est de 5 objets par seconde, de préférence au moins 10 objets par seconde, la vitesse de défilement du dispositif d'alignement sera de 40mm x 5 x 60, soit 12 m/minute, la vitesse linéaire dudit premier convoyeur sera de 5 x 76 x 60, soit 22,8 m/minute, et la vitesse linéaire desdits réceptacles unitaires sera de 5 x 158 x 60, soit environ 47,4 m/minute.

L'installation selon la présente invention permet d'obtenir une cadence de dépose d'objets de 5 à 10 objets par seconde, avec une vitesse linéaire relative dudit objet au moment de sa dépose dans ledit réceptacle par rapport à la vitesse linéaire dudit réceptacle dans la direction longitudinale XX' quasiment nulle.

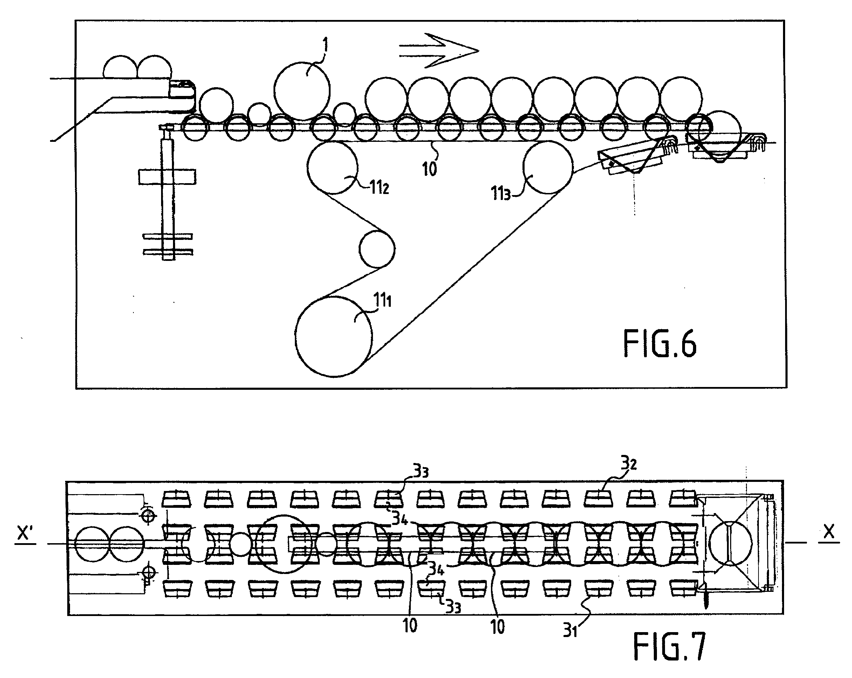

Sur les figures 6 à 8 et 9A, on a représenté une variante de réalisation dans laquelle l'installation comporte des moyens permettant de faire tourner lesdits objets 1 sur eux-mêmes. Dans cette installation, les demi-éléments de séparation tronconiques 3₁, 3₂ présentent une génératrice de pente descendante vers ledit plan axial vertical médian (P). Les demi-éléments de séparation tronconiques 3₁, 3₂ comprennent une partie fixe 3₄ formant un demi-tronc de cône qui occupe essentiellement la face supérieure desdits premiers convoyeurs 2₁, 2₂, c'est-à-dire au dessus des chaînes sans fin 7₁, 7₂. Une partie de ladite partie fixe 34 du côté de son plus grand diamètre chevauche et recouvre les chaînes 7₁, 7₂. de sorte que ladite partie fixe 34 assure une fonction de guidage de chaîne l'empêchant de dérailler. Ladite partie fixe 3₄ est complétée par une partie mobile en rotation 3₃ qui lui est solidaire du côté du petit diamètre de ladite partie fixe 3₄. Ladite partie mobile 3₃ forme une roulette tronconique de même pente génératrice que ladite partie fixe 3₃ demi-tronconique. La roulette 3₃ est apte à être entraînée en rotation autour de son axe de révolution horizontale D₃. La rotation des roulettes 3₃ est obtenue à l'aide d'une bande défilante 10 disposée dans la direction longitudinale XX' axialement entre lesdits premiers convoyeurs 2₁, 2₂ dessous lesdites roulettes 3₃ contre lesquelles elles sont en friction, de sorte que le défilement de ladite bande 10 entraîne la rotation desdites roulettes 3₃ de chacun desdits premiers convoyeurs 2₁, 2₂.

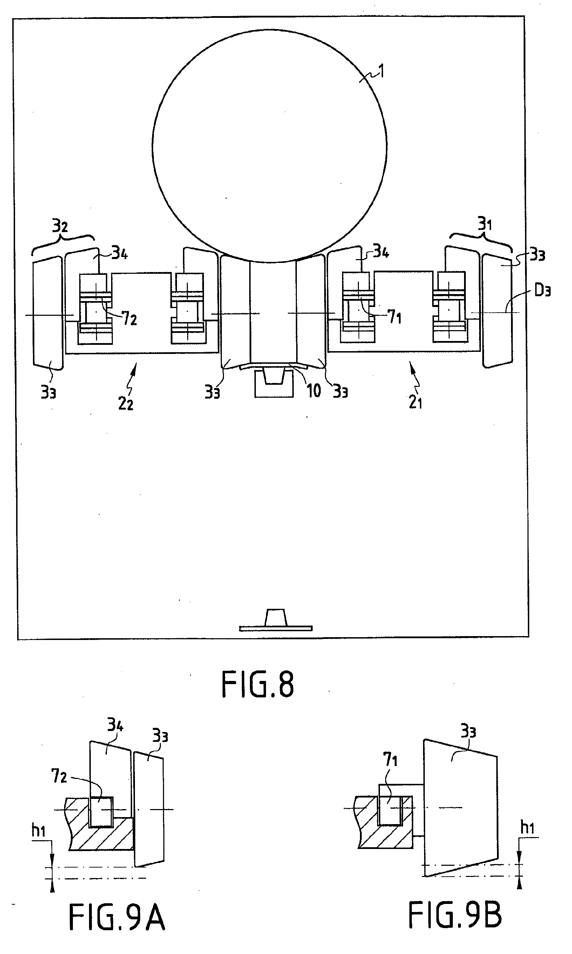

Dans une variante de réalisation (figure 9B), les demi-éléments de séparation 3₁, 3₂ sont constitués chacun uniquement par une roulette 3₃, lesdites roulettes 3₃ pouvant être montées sur une pièce, notamment un moyeux, directement fixé(e) sur les chaînes desdits premiers convoyeurs 2₁, 2₂ et lesdites roulettes étant entraînées en rotation par une même bande défilante ou un mécanisme motorisé au niveau de ladite pièce. Ce mode de réalisation est particulièrement prévu pour les fruits qui présentent une difformité, notamment, une forme non sphérique, car ainsi la totalité desdites surfaces de support desdits demi-éléments de séparation est entraînée en rotation (et non pas seulement une partie).

Dans ce mode de réalisation de la figure 9B, la roulette 3₃ dépasse davantage (h₁) dessous lesdits premiers convoyeurs 2₁, 2₂ que dans le mode de réalisation de la figure 9A où lesdits demi-éléments de séparation tronconiques de même plus grand diamètre et de même longueur de génératrice comportent une roulette 3₃ solidaire d'une partie fixe 3₄ demi-tronconique chevauchant pardessus les chaînes 7₁, 7₂.

Lorsqu'elle est combinée à une dite partie fixe 34 essentiellement demi-tronconique, ladite roulette 3₃ présente elle-même un plus grand diamètre, réduit par rapport au plus grand diamètre de ladite partie fixe, ce qui permet de réduire d'autant la hauteur de transfert entre le déposeur 2 et le second convoyeur 4.

Dans les modes de réalisation dans lesquels la rotation des roulettes 3₃ entraîne la rotation des fruits 1 calés dans les compartiments délimités par deux séries successives de deux demi-éléments de séparation en vis-à-vis, la rotation desdits objets 1 à l'aide d'un élément de contrôle optique telle qu'une caméra (non représentée) orientée vers le bas et située au dessus du dispositif de séparation et de dépose 2, permet de visualiser toutes les faces dudit objet lorsque celui-ci a fait un tour complet sur lui-même et ainsi de déterminer la catégorie de fruit en fonction de ses caractéristiques d'aspect telles que la taille ou, plus généralement, la couleur. En particulier, on peut déterminer quelle est la couleur dominante, ce qui est une caractéristique de tri importante dans le cas de fruits ou de légumes.

Les informations prises par la caméra sont transmises à un ordinateur qui, à l'aide d'un programme, établi une classification de l'objet 1 à partir de certains critères de sélection propres, d'une part au triage que l'on désire effectuer ultérieurement et, d'autre part à la variété du produit trié. Ce triage est pratiqué avant le calibrage par pesée, qui sera déterminé par la calibreuse en prolongation du déposeur, de sorte que le produit peut être trié à la fois en fonction de son poids et de ses caractéristiques d'aspect comme sa couleur et sa qualité, voire sa taille, cette caméra pouvant en effet également servir à réaliser une analyse du volume du produit et faire intervenir ce critère dans son tri ultérieur.

Une telle installation est plus particulièrement utile pour les fruits ou les légumes qui présentent plusieurs couleurs, telles que les tomates qui peuvent être bicolores selon leur degré de maturité, à savoir à dominante verte ou à dominante rouge et que l'on souhaite trier en fonction de cette dominante. Ceci est aussi applicable aux pomme qui peuvent être à dominante rouge, à dominante verte ou à dominante jaune.

Pour déterminer la couleur dominante, il est nécessaire d'inspecter la totalité de la superficie du fruit et donc de faire réaliser une rotation complète du fruit avant de l'analyser à l'aide dudit programme de l'ordinateur.

Sur la figure 6, on a représenté la bande défilante 10 constituée d'un courroie plate circulant autour de poulies 11₁, 11₂ et 11₃ dont l'une au moins 11₁ est entraînée en rotation par un motoréducteur associé à un variateur. La bande défilante 10 entraîne en rotation une partie seulement des roulettes 3₃ en regard de ladite caméra (non représentée) placée au dessus dudit dispositif de séparation et de dépose 2.

Si la bande défilante 10 défile dans le même sens que le sens de circulation desdits premiers convoyeurs 2₁, 2₂ dans ladite direction longitudinale XX', et si la vitesse linéaire de la bande défilante 10 est supérieure à la vitesse de translation desdits éléments de séparation 3₁, 3₂ et dits objets dans ladite direction XX', lesdits objets 1 tournent dans le sens inverse de leur progression dans cette direction.

En revanche si ladite vitesse linéaire de la bande défilante est inférieure à ladite vitesse de translation dans la direction XX', lesdits objets tournent d'arrière en avant, c'est à dire dans le même sens que celui de leur progression dans ladite direction longitudinale XX'.

Si la vitesse linéaire de la bande défilante est égale à celle des éléments de séparation et desdits objets dans lesdits compartiments, lesdits objets ne tournent pas. Ainsi en faisant varier la vitesse linéaire de la bande défilante, on peut mettre en oeuvre un mode de réalisation dans lequel lesdits objets 1 ne tournent pas, notamment dans le cas où une catégorie de fruits supporterait mal la rotation à cause de leur degré de maturité avancée.

Enfin, si la bande défilante défile dans un sens opposé à celui du sens de circulation desdits premiers convoyeurs 2₁, 2₂ dans ladite direction longitudinale, la différence de vitesse est trop importante et on risque d'endommager les fruits.

Dans un mode de réalisation (non représenté), la surface extérieure de révolution desdites roulettes coopère sur une partie avec ladite bande défilante de manière à être entraînée en rotation et sur une autre partie de cette dite surface de révolution, celle-ci est revêtue de poils de manière à pouvoir servir de support souple par rapport aux dits objets.

## Revendications

1. Installation de séparation dans une direction longitudinale (XX') et de triage d'objets fragiles (1) de taille et poids pouvant être différents, comprenant :
- un dispositif de séparation et de dépose (2) comprenant au moins un premier convoyeur sans fin (2₁, 2₂) constitué d'éléments de séparation (3₁-3₂) régulièrement espacés dans ladite direction longitudinale (XX') du trajet de défilement dudit premier convoyeur pour former dans l'espace (p₁) qui les sépare, des compartiments individuels (3) dans lesquels lesdits objets (1) peuvent être logés et entraînés un à un, avant d'être déposés par gravité en fin de course dudit premier convoyeur, respectivement dans :
- une suite de réceptacles unitaires (5) régulièrement espacés (p₂), aptes à recevoir chacun un dit objet, constituant un second convoyeur sans fin de triage (4) disposé en contrebas dudit premier convoyeur, chaque dit réceptacle (5) coopérant de préférence avec un moyen de calibrage desdits objets par détermination de la valeur d'au moins une caractéristique de tri,
**caractérisée en ce que** :
- ledit dispositif de séparation et de dépose (2) comprend deux dits premiers convoyeurs sans fin (2₁, 2₂), de préférence à chaîne, disposés côte à côte et parallèlement dans ladite direction longitudinale (XX'), la circulation de chaque dit premier convoyeur se faisant dans un plan horizontal autour de deux axes verticaux (D₁-D'_{1,} D₂-D'₂) espacés (L) dans ladite direction longitudinale (XX'),
- chaque dit premier convoyeur (2₁, 2₂) comprenant des demi-éléments de séparation (3₁, 3₂) qui coopèrent entre eux pour :
■ former lesdits éléments de séparation et lesdits compartiments (3) dans la portion du trajet de défilement correspondant à ladite direction longitudinale (XX'), et
■ déposer directement par gravité lesdits objets dans un dit réceptacle unitaire (5) dudit second convoyeur (4) lorsque deux demi-éléments (3₁, 3₂) formant un dit élément de séparation s'écartent l'un de l'autre respectivement par rotation autour de leurs dits axes de rotation verticaux (D₁, D₂) à l'extrémité dudit dispositif de séparation et de dépose (2).

2. Installation selon la revendication 1, **caractérisée en ce que** lesdits demi éléments de séparation (3₁, 3₂) comprennent au moins une partie fixe qui occupe essentiellement la face supérieure desdits premiers convoyeurs.

3. Installation selon l'une des revendications 1 ou 2, **caractérisée en ce que** lesdits demi-éléments de séparation (3₁, 3₂) comprennent desdites surfaces de support et d'entraînement desdits objets qui définissent des surfaces de révolution d'axe de révolution de préférence horizontal (D₃) ou vertical.

4. Installation selon l'une des revendications 1 à 3, **caractérisée en ce que** lesdits demi-éléments de séparation (3₁, 3₂) occupent essentiellement, uniquement, la face supérieure desdits premiers convoyeurs.

5. Installation selon l'une des revendications 1 à 3, **caractérisée en ce que** lesdits demi-éléments de séparation (3₁, 3₂) comprennent desdites surfaces de support et d'entraînement desdits objets qui définissent des surfaces de révolution d'axe de révolution, de préférence horizontal (D₃) ou vertical, surface de révolution dont au moins une partie (3₃) est apte à être entraînée en rotation sur elle-même autour dudit axe de révolution (D₃) de manière à faire tourner lesdits objets sur eux-mêmes.

6. Installation selon la revendication 5, **caractérisée en ce que** ladite surface de révolution d'axe de révolution horizontal (D₃) ou vertical est apte à être entraînée en rotation, au moins en partie, par une bande défilante (10) dans ladite direction longitudinale venant en friction contre ladite surface de révolution ou partie de surface de révolution apte à être entraînée en rotation.

7. Installation selon l'une des revendications 2 à 6, **caractérisée en ce que** lesdits demi-éléments de séparation (3₁, 3₂) définissent des surfaces tronconiques, de préférence symétriques par rapport à un plan axial (P) vertical de symétrie desdits compartiments de séparation (3), dans ladite direction longitudinale (XX').

8. Installation selon l'une des revendications 2 à 6, **caractérisée en ce que** lesdits demi-éléments de séparation (3₁, 3₂) définissent au moins en partie des demi-troncs de cônes fixes d'axes horizontaux, symétriques par rapport à un plan axial (P) vertical de symétrie desdits compartiments de séparation (3), dans ladite direction longitudinale (XX'), demi-troncs de cône dont la génératrice est en pente descendante vers ledit plan axial (P).

9. Installation selon l'une des revendications 5 à 8, **caractérisée en ce que** lesdits demi-éléments de séparation (3₁, 3₂) comprennent une partie fixe (3₄) et une partie mobile (3₃) solidaire de ladite partie fixe (3₄), ladite partie mobile (3₃) définissant une surface de révolution apte à être entraînée en rotation sur elle-même autour de son axe de révolution.

10. Installation selon la revendication 9, **caractérisée en ce que** ladite partie mobile est constituée par une roulette (3₃).

11. Installation selon la revendication 9 ou 10, **caractérisée en ce que** ladite roulette (3₃) est placée au côté d'une dite partie fixe (3₄), cette dernière constituant une surface demi-tronconique dont la génératrice est en pente descendante vers ledit plan axial (P) vertical de symétrie desdits compartiments de séparation (3), de même axe de révolution horizontal (D₃) que ladite roulette (3₃), celle-ci étant placée du côté de ladite partie fixe (3₄) le plus proche dudit plan axial (P) de symétrie des dits compartiments de séparation (3), et ladite bande défilante (10) est placée horizontalement dans ladite direction longitudinale (XX') dessous ladite roulette (3₃).

12. Installation selon l'une des revendications 5 à 11, **caractérisée en ce qu'**une même bande défilante (10) disposée axialement dans ladite direction longitudinale (XX') sur une partie seulement de la longueur dudit dispositif de séparation et de dépose (2) entraîne en rotation lesdites surfaces de révolution mobiles, de préférence, les dites roulettes (3₃) de chacun desdits premiers convoyeurs (2₁, 2₂).

13. Installation selon la revendication 5, 7, 9 ou 10, **caractérisée en ce que** lesdits demi-éléments de séparation (3₁, 3₂) comprennent desdites surfaces de support et d'entraînement desdits objets qui définissent des surfaces de révolution d'axe de révolution vertical, dont une partie au moins de ladite surface de révolution, constituée de préférence d'une roulette, est apte à être entraînée en rotation horizontale autour de son axe vertical par deux dites bandes défilantes placées latéralement par rapport aux dits demi-éléments de séparation dans ladite direction longitudinale (XX'), venant en friction contre lesdites surfaces de révolution aptes à être entraînées en rotation.

14. Installation selon la revendication 4, **caractérisée en ce que** lesdits demi-éléments de séparation (3₁, 3₂) définissent des demi-troncs de cônes fixes d'axes horizontaux symétriques par rapport à un plan axial (P) vertical de symétrie desdits compartiments de séparation (4) dans la direction longitudinale et des demi-troncs de cônes dont la génératrice est en pente descendante vers ledit plan axial (P).

15. Installation selon l'une des revendications 1 à 14, **caractérisée en ce que** lesdits demi-éléments de séparation (3₁, 3₂) comprennent desdites surfaces de support et d'entraînement desdits objets qui sont, au moins en partie, revêtues de poils souples ou semi-rigides.

16. Installation selon l'une des revendications 1 à 15, **caractérisée en ce que** la motorisation desdits premiers convoyeurs (2₁, 2₂) est placée sous les pignons d'axes de rotation (D'₁, D'₂) à l'extrémité dudit dispositif de séparation et de dépose (2) du côté de son alimentation, et la circulation dudit deuxième convoyeur (4) se fait autour d'un pignon (9) d'axe horizontal (D₄) qui s'étend en partie en dessous l'autre extrémité dudit dispositif de séparation et de dépose (2).

17. Installation selon l'une des revendications 1 à 16, **caractérisée en ce que** la hauteur de chute desdits objets fragiles (1) lors de ladite dépose desdits objets dans lesdits réceptacles unitaires (5) est inférieure à 100 mm, de préférence inférieure à 50 mm, et le bord supérieur desdits réceptacles unitaires (5) dudit second convoyeur (4) de triage arrive juste au-dessous de la face inférieure dudit premier convoyeur à son extrémité.

18. Installation selon l'une des revendications 1 à 17, **caractérisée en ce que** ledit dispositif de séparation (2) est alimenté en dits objets fragiles (1) à partir d'un dispositif d'alignement de préférence à courroies (6), placés en continuité l'un de l'autre dans ladite direction longitudinale (XX').

19. Installation selon l'une des revendications 1 à 18, **caractérisée en ce que** le pas d'espacement (p₂) de deux dits réceptacles unitaires (5) successifs dudit deuxième convoyeur sans fin (4) est supérieur au pas d'espacement (p₁) de deux dits éléments de séparation (3₁-3₂) successifs dans ladite direction longitudinale du trajet desdits premiers convoyeurs, de préférence le pas d'espacement (p₂) desdits réceptacles unitaires (5) est sensiblement le double du pas d'espacement (p₁) desdits éléments de séparation (3₁, 3₂).

20. Installation selon la revendication 19, **caractérisée en ce que** le pas d'espacement (p₁) desdits éléments de séparation (3₁-3₂) successifs est sensiblement identique à la dimension moyenne desdits objets dans ladite direction longitudinale (XX'), de préférence à 60 à 120 mm, de préférence encore, environ 75 mm.

21. Procédé de triage d'objets fragiles à l'aide d'une installation selon l'une des revendications 1 à 20, **caractérisé en ce qu'**on réalise les étapes dans lesquelles :
a) on alimente ledit dispositif de séparation (2) avec desdits objets fragiles (1), de préférence à partir d'un dit dispositif d'alignement de préférence à courroie (6), et
b) les vitesses linéaires respectives de défilement desdits premiers (2₁, 2₂) et second convoyeur (4) sont réglés de manière à ce que lesdits objets fragiles sont déposés dans un dit réceptacle unitaire (5).

22. Procédé selon la revendication 21, **caractérisé en ce que** la cadence de dépose et de réception desdits objets par respectivement lesdits premiers et second convoyeurs correspond à une cadence d'au moins cinq objets par seconde, de préférence au moins dix objets par seconde.

23. Procédé selon l'une des revendications 21 ou 22, **caractérisé en ce que** la vitesse linéaire (m/sec) relative desdits objets dans ladite direction longitudinale (XX') par rapport auxdits réceptacles lors de ladite dépose est sensiblement nulle.

24. Procédé selon l'une des revendications 21 à 23, **caractérisé en ce que** la vitesse linéaire (V₂) dudit deuxième convoyeur (4) est supérieure, de préférence sensiblement le double, de la vitesse linéaire (V₁) desdits objets en translation dans lesdits compartiments (3) desdits premiers convoyeurs (2₁, 2₂) dans ladite direction longitudinale (XX').

25. Procédé selon l'une des revendications 21 à 24, **caractérisé en ce que** la vitesse linéaire de défilement dudit dispositif d'alignement (6) est réglé pour obtenir une cadence d'alimentation du dispositif de séparation et de dépose (2) identique à ladite cadence de dépose desdits objets, lorsque ledit dispositif d'alignement (6) alimente ledit dispositif de séparation et de dépose (2) avec des objets au touche à touche, dont la taille correspond à la plus petite taille desdits objets dans un lot d'objets à trier.

26. Procédé selon l'une des revendications 21 à 25 dans lequel on utilise une installation selon l'une revendications 6 à 20 **caractérisée en ce que** la vitesse linéaire de défilement de ladite bande défilante (10) permettant la rotation desdits objets sur eux-mêmes, est sensiblement supérieure ou inférieure à la vitesse linéaire (V₁) du dit premier convoyeur (2₁, 2₂) de manière à permettre la rotation desdits objets (1) sur eux-mêmes.
